# EUROPEAN PATENT SPECIFICATION

(11) **EP 2 592 188 B1**
(45) Date of publication and mention of the grant of the patent: **27.08.2014**
(21) Application number: 11188839.2
(22) Date of filing: 11.11.2011
(51) Int. Cl.: E02F 3/627

(54) **Loader arm**
Ladearm
Bras de chargement

(43) Date of publication of application: 15.05.2013
(73) Proprietor: ÅLÖ AB, 901 37 Umea (SE)
(72) Inventor: Lindgren, Kjell, 905 92 Umeå (SE)
(74) Representative: Engdahl, Stefan

(56) References cited:
- DE-A1- 3 413 584
- JP-A- 2002 129 593
- JP-A- 2004 143 853
- US-A- 3 934 134
- US-A1- 2005 024 885
- US-A1- 2005 270 778

## Description

### Field of the invention

The present invention relates to a loader arm for a tractor.

### Background of the invention

Tractors provided with different types of front loaders are frequently used within many different areas in order to facilitate and speed up the work. In the forward end of the tractor, a loader arm extending in the forward direction of the tractor is arranged. In the forward end of the loader arm, a working tool suitable for the intended type of work is attached. The working tool is exchangeable attached to the loader arm in order to be easily exchanged when tractor is needed for another type of work.

During the exchange of the working tool, the tractor and working tool must be correctly positioned in relation to each other which require that the operator of the tractor is able to see the forward end of the loader arm as well as the working tool that should be attached / detached. This is normally not a problem at daytime when the daylight gives enough illumination for the operator to see the loader arm as well as the working tool in front of the tractor. However, during the autumn, winter, late nights and not illuminated areas indoors there are not enough light for the operator to be able to perform the required exchange of working tool in a reliable, safe and efficient way.

Tractors are provided with lamps directed towards the working area in front of the tractor but unfortunately the direction of these lamps result in that the area of the exchange of working tool not is illuminated in a satisfying way. Different arrangements for illumination of the working area of the tractor are disclosed in US2005/0024885, US 3 934 134 and US2005/0270778 but none of the disclosed arrangement will provide satisfying illumination during the exchange of working tools. Furthermore, lamps arranged in the front area of the tractor easily get damaged by items falling from the working tool.

JP 2004-143 853 and DE 34 13 584 A1 disclose working machines having lighting means and video monitoring means, respectively, in positions protected from falling objects.

There is consequently a need for an improved arrangement for illumination during attachment/detachment of the working tool.

### Summary of the invention

The present invention, defined in the appended claims, provides a loader arm for a tractor that fulfils the needs defined above.

The loader arm according to the invention is set out in claim 1.

The claimed invention fulfils the needs defined above since the illumination devices integrated in the loader arm in combination with the direction of the illumination devices towards the tool supporting means ensures that the illumination devices always are illuminating the desired area even though the position of the forward end of the loader arm may be changed. Furthermore, the illumination devices are positioned so that shadows in the area where the illumination is desired are avoided, and with the illumination devices integrated in the loader arm, the risk for damages of the illumination device by falling items from the working tool is reduced considerably.

In one embodiment of the invention, each of said arm section comprises a first substantially straight section comprising said first end, and a second substantially straight arm section comprising said second end, said first and second arm section are secured together by a connecting member and forms an angle α between 90° to 150°, wherein said illumination devices are arranged in said connecting members or first arm sections. This emboidment is favourable since the positioning of the illumination devices in the first (aft) arm section in loader arms consisting of a first and second section angled in relation to each further improves the illumination of the second (forward) end of the loader arms since the illumination device could be directed more precise on the desired area without risking that the illumination is affected by the loader arm or the front of the tractor.

In one embodiment of the invention, the connecting members and the first arm sections has a lower side facing the ground when the arm sections are arranged in the intended position on the tractor and said illumination device, or devices, are arranged in the lower side of the connecting members or first arm sections. This emboidment of the invention is favourable since the illumination devices, arranged in the lower sides of the arm sections, are protected by the arm sections from falling items from the woring tool, or the surroundings, as well as from rain and snow.

In one embodiment of the invention, the illumination device, or devices, is arranged in said transverse beam. This embodiment is favourable to use if the space available in the arm sections not is large enough to house the illumination devices.

In one embodiment of the invention, said illumination device, or each of said devices, is arranged in a corresponding recess in said arm sections or transverse beam. Arranging the illumination devices in the corresponding recess ensures that the illumination device is well protected and the risk for damages reduces. Furthermore, the risk that other persons or operators of other vehicles in the surrounding area are negatively affected by the light from the illumination devices is reduced.

In one embodiment of the invention, the illumination device, or devices, is activated by a lever or switch in the tractor. This embodiment of the invention increases the overall life time of the illumination devices and reduces the energy consumption of the illumination devices since the illumination devices only are activated when illumination is desired.

In one embodiment of the invention, power to the illumination device, or devices, is provided via one or more cables arranged in said arm sections which are favourable since the cables are protected by the arm sections without any risk for damage to the cables from surrounding objects.

In one embodiment of the invention, the illumination device, or devices, comprises one or more lamps, or LED-diodes, surrounded by a lamp housing turnably secured by fastening means in the loader arm. This embodiment is favourable since the fastening means makes it possible to adjust the illumination direction.

The loader arm according to the invention furthermore comprises one, or more, cameras arranged together with the illumination devices, said cameras are connected to a monitor in the tractor. This increases the possibility for the operator to monitor the attachment / detachment of working tools further thereby reducing the risk for accidents or problems that might occur if the working tool not is correctly attached.

In one embodiment of the invention, the cameras are controlled by control means in said tractor in order to facilitate the operation of the cameras.

The different embodiments described above could of course be combined and modified in different ways without departing from the scope of the invention that will be described more in detail in the detailed description.

### Brief description of the drawings

Different embodiments of loader arms according to the present invention are illustrated in the appended figures.
Figure 1 illustrates a side view of a tractor and a loader arm.
Figure 2 illustrated a side view of a loader arm and a working tool.
Figure 3 illustrates a perspective front view of the loader and the working tool.
Figure 4 illustrates an illumination device arranged in the loader arm.
Figure 5 illustrates an alternative embodiment of the loader arm in figure 4.
Figure 6 and 7 illustrates an alternative arrangement of the loader arm.

### Detailed description

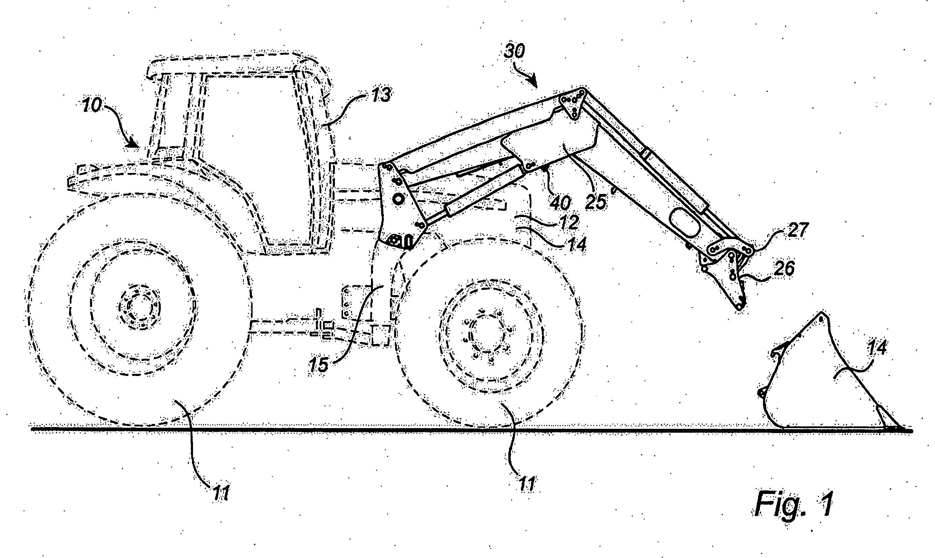

In figure 1, a side view of a tractor 10 is schematically illustrated. The tractor 10 comprises a supporting chassis for the different components of the tractor such as for example wheels 11, an engine 12, operator housing 13 etc.

The tractor has a forward end 14 in which a loader arm 30 is arranged. The loader arm 30 is intended to support an exchangeable working tool. In figure1, no working tool is attached to the loader arm 30 but a working tool in the form of a bucket 14 is arranged on the ground in front of the tractor 10.

The loader arm 30 comprises two arm sections 20 movably attached on opposite sides of the forward end 14 of the tractor 10. The two arm sections 20 are attached to corresponding subframes 15 arranged on each side of the forward end 14 of the tractor 10. Each subframe 15 is secured in the tractor chassis in order to provide a strong and rigid support for the loader arm 30.

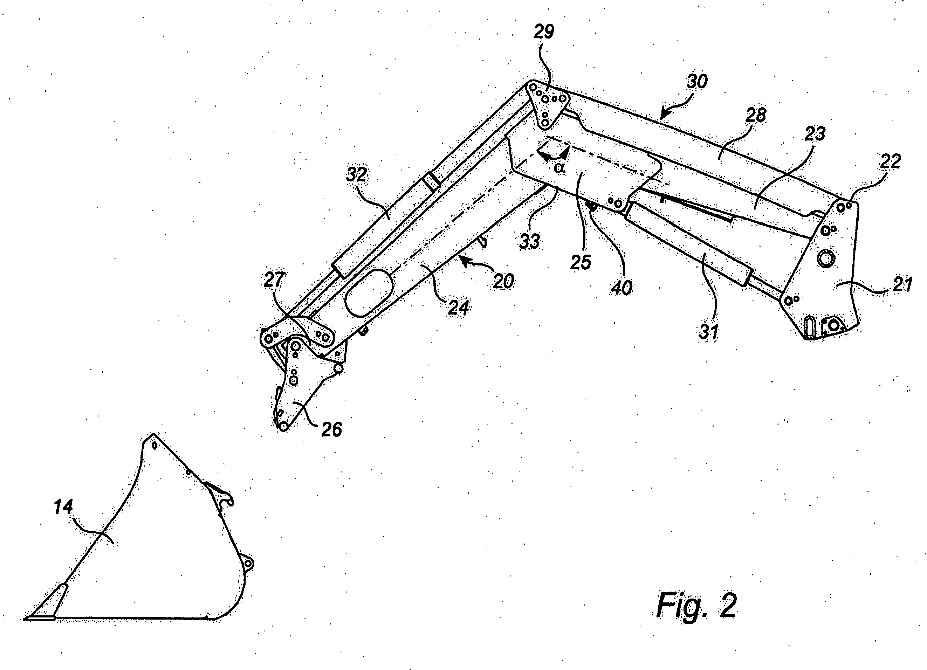

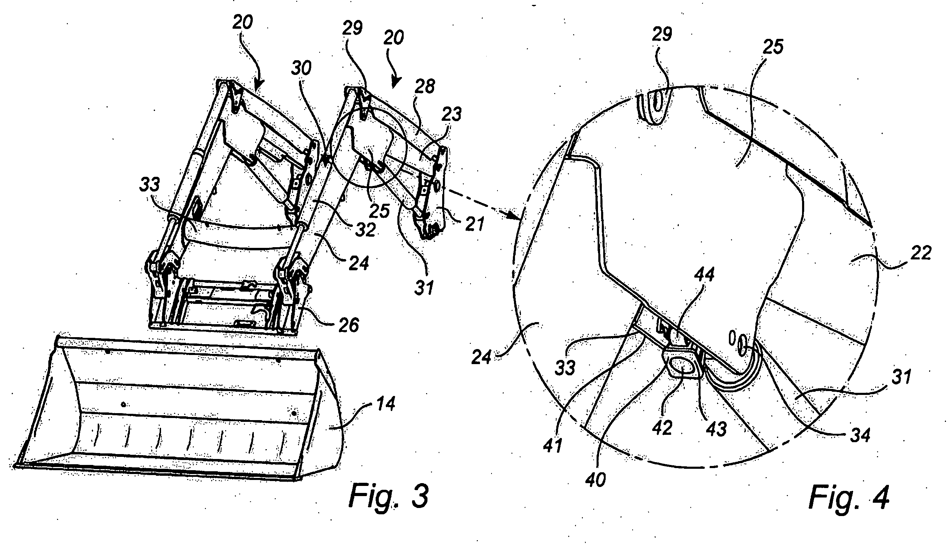

The two arm sections 20 have similar configuration and a side view of one embodiment of the arm sections 20 is illustrated figure 2. Each arm section 20 comprises: a frame support member 21 arranged in a first end 22 of the arm section 20; a first arm section 23 secured in the frame support member 21 and extending in a forward direction of the tractor 10; a second arm section 24 rigidly secured in the first arm section 23 by a connecting member 25, and a working tool support 26 arranged in a second forward end 27 of the arm section 20. Each arm section furthermore comprises a link 28 extending substantially parallel to the first arm section 23 above the first arm section 23. One end of the link 28 is turnably secured in the frame support member 21 while the other end is turnably secured in a connection plate 29 turnably secured in the top part of said connection member 25 from which a hydraulic working tool hydraulic cylinder 32 extends. The hydraulic working tool cylinder makes it possible to alternate the angular position of the working tool 14 in the forward end of the loader arm 30. Each arm section 20 further comprises a loader arm hydraulic cylinder 31 extending between the frame support member 21 and the connecting member 25 in order to move the loader arm around the fastening point of the first arm section 23 in the frame support member 21. The two arm sections are structurally connected by a transverse beam 33 extending between the two arm sections 20 and the working tool support 26 that also extends between the forward ends of the two arm sections 20, illustrated in figure 3.

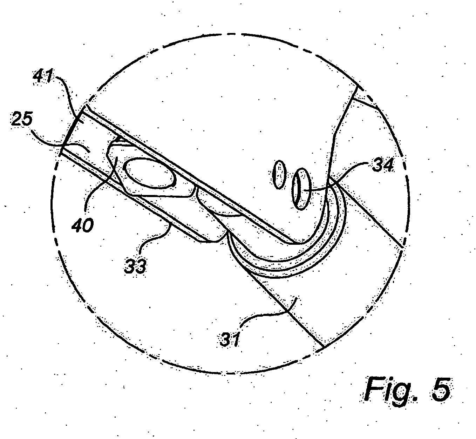

In each arm section 20, an illumination device 40 is arranged in the connecting member 25. In the side of the connecting member 25 that is facing the ground, the lower side 33, the illumination device 40 is arranged in a recess 41 in the connecting member 25. The recess 41 is located in front of the attachment point 34 of the loader arm cylinder 31 and aft of the second arm section 24. This position ensures satisfying illumination of the working tool support 26 in the second end 27 of the loader arm since no part of the loader arm 30 or the front of the tractor 10 will disturb the illumination beams from the illumination device 40 to the working tool support 26 no matter the position of the loader arm 30. Two different positions of the illumination device in the connecting member 25 are disclosed in figure 4 and 5. In figure 5, the illumination device in moved further into the connecting member 25 in order to reduce the risk that light from the illumination device are disturbing persons in the area surrounding the tractor. Preferably the illumination device is arranged completely within the recess in the connecting member and no part of the illumination device housing protruding below the lower side 33 of connecting member.

However, the position of the illumination device in the arm sections 20 could be moved either towards the first end 22 of the arm section 20, or forwards to the second arm section 24 as long as the illumination device is directed towards the working tool support and a satisfying illumination of the working tool support 26 is achieved.

The illumination devices 40 comprises one, or more lamp, alternatively LED-diodes protected by a covering glass 42 and surrounded by a reflector arranged inside a protecting lamp housing 43. The lamp housing 43 is secured by fastening means 44 in the recess 41 and directed towards the working tool support 26 in the forward second end 27 of the loader arm 30 in order to provide the desired illumination of the working tool support 27 and the area surrounding the working tool support 26. The fastening means are either providing a turnable fastening of the illumination device in order to be able to adjust the illumination area or permanently fixing the illumination device in the desired direction towards the forward end of the loader arm.

The loader arm provided with the illumination devices according to the invention are very favourable since the illumination device could be directed towards the area of the desired illumination without being disturbed or affected by the front of the tractor. Furthermore, the illumination devices are very well protected by the loader arm against rain, snow or dirt coming from the sides or above, and falling objects from the working tool.

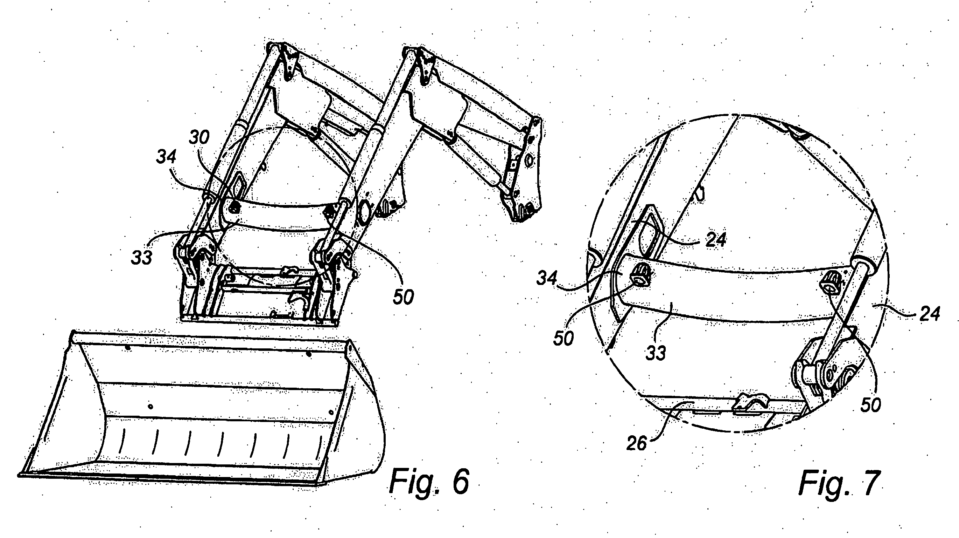

An alternative embodiment of a loader arm according to the invention is illustrated in figure 6. The loader arm in figure 6 is identical to the previously described loader arm except that the illumination devices are moved from the connecting members 25 to the transverse beam 33 extending between the second arm sections 24 to secure the two arm sections 20 together. In figure 6, two illumination devices 50 are arranged close to the two ends 34 of the transverse beam 33. The illumination devices 50 are directed towards the tool support means 26 in the forward end of the arm sections in similar way as described above. The illumination devices could also be positioned at different locations along, and around the transverse beam 33 in order to provide the best illumination possible. Preferably the illumination devices are arranged in recesses or a protective casing in the lower part of the beam 33 in order to be protected from falling objects even though this is not illustrated in the figures.

The illumination devices are preferably powered by the tractor 10 via cables or wires arranged in said loader arm. The cables extend inside the first arm section from the connection to the tractor that is normally arranged close to the frame support member in the first end 22 of each arm section. This is favourable since the cables or wires are protected by the arm sections without any risk for damage to the cables or wires from surrounding objects. Furthermore the illumination devices could be activated by a lever arranged close to the operator in the tractor in order to increases the overall life time and reduces the energy consumption of the illumination devices.

In one embodiment of the loader arm, the loader arm furthermore comprises one, or more, cameras arranged together with the illumination devices 40. The cameras are preferably also arranged in the protective recess for the same reasons described above and are connected to a monitor in the tractor in order to provided information about the positioning of the loader arm in relation to the ground and the attached / detached working tool. In similar way as the illumination devices, the cameras are controlled by control means in said tractor in order to facilitate the monitoring of the attachment /detachment of the working tool for the operator.

Even though different alternatives have been mentioned above, further embodiments of the loader arm and the illumination device are possible without departing from the scope of the invention that is defined by the claims. Further embodiments of the invention are possible, for example the illumination devices could be modified and the positioning of the illumination devices, and possible cameras, modified further. For example, the illumination devices could be arranged along the substantially vertical sides of the arm sections and protected by covering plates alternatively moulded housings secured to the side surfaces of the arm sections. The illumination devices are preferably arranged on the sides of the arm sections facing away from the tractor in order to avoid contact between the illumination device housings and the front of the tractor. Furthermore the construction of the loader arm could be amended in several ways.

## Claims

1. Loader arm (30) for a tractor (10), said loader arm (30) is intended to extend in a forward direction of the tractor (10) and be movaby arranged on the tractor (10), said loader arm (10) comprising:
two arm sections(20), each of said arm sections(20) having a first end (22) and a second end (27), said first end (22) is intended to be secured in the tractor (10) while said second end (27) is intended to be arranged in front of said tractor (10);
tool supporting means (26) for an exchangeable working tool, said tool supporting means(26) are arranged in said second end (27) of the arm sections;
**characterised in that** the loader arm further comprises
a transverse beam connecting said two arm sections; and
one, or more, illumination devices (40; 50) integrated in the arm sections (20) and/or the transverse beam (33), said illumination device (40; 50) or devices (40; 50) are directed towards said tool supporting means (26); and
one, or more, cameras arranged together with the illumination devices, said cameras are connected to a monitor in the tractor.

2. Loader arm (30) according to claim 1, wherein each of said arm sections (20) comprises a first substantially straight arm section (23) comprising said first end (22) and a second substantially straight arm section (24) comprising said second end, said first and second arm section are secured together by a connecting member (25) and forms an angle α between 90° to 150°, wherein said illumination device (40) or devices (40) are arranged in said connecting member or first arm section (23).

3. Loader arm (30) according to claim 2, wherein said connecting members (25) and first arm sections (23) has a lower side (31) facing the ground when the loader arm (30) is arranged in the intended position on the tractor (10) and said illumination device (40), or devices, are arranged in the lower side (31) of the connecting members (25) or first arm sections (23).

4. Loader arm (30) according to claim 1, wherein said illumination device (50), or illumination devices, is arranged in said transverse beam (33).

5. Loader arm (30) according to claim 1, wherein said illumination device (40), or each of said devices (40), is arranged in a corresponding recess (41) in said arm sections or transverse beam (33).

6. Loader arm (30) according to anyone of the previous claims wherein the illumination device (40), or illumination devices, is activated by a lever or switch in the tractor (10).

7. Loader arm (30) according to anyone of the previous claims, wherein power to the illumination device (40), or devices (40), is provided via one or more cables or wires arranged in said arm sections.

8. Loader arm (30) according to anyone of the previous claims, wherein said illumination device (40) or devices (40), comprises one or more lamps or LED-diodes surrounded by a lamp housing 43 turnably secured by fastening means (44) in the loader arm (20).

9. Loader arm (30) according to claim 1, wherein said cameras are controlled by control means in said tractor.

## Patentansprüche

1. Ladearm (30) für einen Traktor (10), wobei der Ladearm (30) dazu vorgesehen ist, sich in einer Vorwärtsrichtung des Traktors (10) zu erstrecken und beweglich an dem Traktor (10) angeordnet zu werden, wobei der Ladearm (30) umfasst:
zwei Armabschnitte (20), wobei jeder der Armabschnitte (20) ein erstes Ende (22) und ein zweites Ende (27) aufweist, wobei das erste Ende (22) dazu vorgesehen ist, in dem Traktor (10) befestigt zu werden, während das zweite Ende (27) dazu vorgesehen ist, vor dem Traktor (10) angeordnet zu werden;
Werkzeughaltemittel (26) für ein auswechselbares Arbeitswerkzeug,
wobei die Werkzeughaltemittel (26) in dem zweiten Ende (27) der Armabschnitte angeordnet sind;
**dadurch gekennzeichnet, dass** der Ladearm ferner umfasst:
einen Querträger, der die zwei Armabschnitte verbindet; und
eine oder mehrere Beleuchtungsvorrichtungen (40; 50), die in die Armabschnitte (20) und/oder den Querträger (33) integriert sind, wobei die Beleuchtungsvorrichtung (40; 50) oder -vorrichtungen (40; 50) auf das Werkzeughaltemittel (26) gerichtet ist bzw. sind; und
eine oder mehrere Kameras, die zusammen mit den Beleuchtungsvorrichtungen angeordnet sind, wobei diese Kameras mit einem Monitor in dem Traktor verbunden sind.

2. Ladearm (30) nach Anspruch 1, wobei jeder der Armabschnitte (20) einen ersten, im Wesentlichen geraden Armabschnitt (23) umfasst, der das erste Ende (22) umfasst, und einen zweiten, im Wesentlichen geraden Armabschnitt (24), der das zweite Ende umfasst, wobei der erste und der zweite Armabschnitt durch ein Verbindungselement (25) aneinander befestigt sind und einen Winkel α zwischen 90° und 150° bilden, wobei die Beleuchtungsvorrichtung (40) oder -vorrichtungen (40) in dem Verbindungselement oder dem ersten Armabschnitt (23) angeordnet ist bzw. sind.

3. Ladearm (30) nach Anspruch 2, wobei die Verbindungselemente (25) und ersten Armabschnitte (23) eine Unterseite (31) aufweisen, die dem Boden zugewandt ist, wenn der Ladearm (30) in der vorgesehenen Position an dem Traktor (10) angeordnet ist, und die Beleuchtungsvorrichtung oder -vorrichtungen (40) in der Unterseite (31) der Verbindungselemente (25) oder ersten Armabschnitte (23) angeordnet ist bzw. sind.

4. Ladearm (30) nach Anspruch 1, wobei die Beleuchtungsvorrichtung (50) oder die Beleuchtungsvorrichtungen in dem Querträger (33) angeordnet ist bzw. sind.

5. Ladearm (30) nach Anspruch 1, wobei die Beleuchtungsvorrichtung (40) oder jede der Vorrichtungen (40) in einer entsprechenden Vertiefung (41) in den Armabschnitten oder dem Querträger (33) angeordnet ist.

6. Ladearm (30) nach einem der vorhergehenden Ansprüche, wobei die Beleuchtungsvorrichtung (40) oder die Beleuchtungsvorrichtungen durch einen Hebel oder Schalter in dem Traktor (10) aktiviert wird bzw. werden.

7. Ladearm (30) nach einem der vorhergehenden Ansprüche, wobei der Beleuchtungsvorrichtung (40) oder den Beleuchtungsvorrichtungen (40) Strom über ein oder mehrere Kabel oder einen oder mehrere Drähte zugeführt wird, die in den Armabschnitten angeordnet sind.

8. Ladearm (30) nach einem der vorhergehenden Ansprüche, wobei die Beleuchtungsvorrichtung (40) oder -vorrichtungen (40) eine oder mehrere Lampen oder Leuchtdioden umfasst bzw. umfassen, die von einem Lampengehäuse (43) umgeben sind, das durch Befestigungsmittel (44) drehbar in dem Ladearm (20) befestigt ist.

9. Ladearm (30) nach Anspruch 1, wobei die Kameras durch Steuerungsmittel in dem Traktor gesteuert werden.

## Revendications

1. Bras de chargement (30) pour un tracteur (10), ledit bras de chargement (30) est enclin à s'étendre dans une direction avant du tracteur (10) et être disposé de manière déplaçable sur le tracteur (10), ledit bras de chargement (30) comprenant :
deux sections de bras (20), chacune desdites sections de bras (20) ayant une première extrémité (22) et une seconde extrémité (27), ladite première extrémité (22) est encline à être fixée dans le tracteur (10) alors que ladite seconde extrémité (27) est encline à être disposée à l'avant dudit tracteur (10) ;
un moyen de support d'outil (26) pour un outil de travail échangeable, ledit moyen de support d'outil (26) est disposé dans ladite seconde extrémité (27) des sections de bras ;
**caractérisé en ce que** le bras de chargement comprend en outre
une poutre transversale raccordant deux sections de bras ; et
un ou plusieurs dispositifs d'éclairage (40 ; 50) intégrés dans les sections de bras (20) et/ou la poutre transversale (33), ledit dispositif d'éclairage (40 ; 50) ou des dispositifs (40 ; 50) sont dirigés vers ledit moyen de support d'outil (26) ; et
une ou des caméras disposées conjointement aux dispositifs d'illumination, lesdites caméras sont connectés à un moniteur dans le tracteur.

2. Bras de chargement (30) selon la revendication 1, dans lequel chacune desdites sections de bras (20) comprend une première section de bras substantiellement droite (23) comprenant ladite première extrémité (22) et une seconde section de bras substantiellement droite (24) comprenant ladite seconde extrémité, ladite première et seconde section de bras sont fixées conjointement par un élément de raccordement (25) et forme un angle a entre 90° et 150°, dans lequel ledit dispositif d'éclairage (40) ou dispositifs (40) sont agencés dans ledit élément de raccorder ou ladite première section de bras (23).

3. Bras de chargement (30) selon la revendication 2, dans lequel lesdits éléments de raccordement (25) et lesdites premières sections de bras (23) a un côté inférieur (31) faisant face au sol quand le bras de chargement (30) est disposé dans la position encline sur le tracteur (10) et ledit dispositif d'éclairage (40) ou les dispositifs sont disposés dans le côté inférieur (31) des éléments de raccordement (25) ou premières sections de bras (23).

4. Bras de chargement (30) selon la revendication 1, dans lequel ledit dispositif d'éclairage (50) ou les dispositifs d'éclairage est disposé dans ladite poutre transversale (33).

5. Bras de chargement (30) selon la revendication 1, dans lequel ledit dispositif d'éclairage (40) ou chacun desdits dispositifs (40) est agencé dans un évidement correspondant (41) dans ladite section de bras ou poutre transversale (33).

6. Bras de chargement (30) selon une quelconque des revendications précédentes, dans lequel le dispositif d'éclairage (40) ou les dispositifs d'éclairage sont activés par un levier ou commutateur dans le tracteur (10).

7. Bras de chargement (30) selon une quelconque des revendications précédentes, dans lequel l'alimentation électrique du dispositif d'éclairage (40) ou des dispositifs d'éclairage (40) est fournie via un ou des câbles ou fils disposés dans lesdites sections de bras.

8. Bras de chargement (30) selon une quelconque des revendications précédentes, dans lequel ledit dispositif d'éclairage (40) ou dispositifs (40) comprend une ou des lampes ou diodes à LED entourées par un logement de lampe (43) fixée de manière tournante par des moyens de fixation (44) dans le bras de chargement (20).

9. Bras de chargement (30) selon la revendication 1, dans lequel lesdites caméras sont commandées par des moyens de commande dans ledit tracteur.
